# EUROPEAN PATENT SPECIFICATION

(11) **EP 3 079 926 B1**
(45) Date of publication and mention of the grant of the patent: **16.08.2023**
(21) Application number: 14870197.2
(22) Date of filing: 05.12.2014
(51) Int. Cl.: B60C 15/06, G06K 19/077, H04B 5/00

(54) **TIRE HAVING AN ELECTRONIC DEVICE IN A LOWER SIDEWALL**
REIFEN MIT EINER ELEKTRONISCHEN VORRICHTUNG IN EINER UNTEREN SEITENWAND
PNEU COMPORTANT UN DISPOSITIF ÉLECTRONIQUE DANS UNE PAROI LATÉRALE INFÉRIEURE

(30) Priority: 13.12.2013 US 201361915556 P
(43) Date of publication of application: 19.10.2016
(73) Proprietor: Bridgestone Americas Tire Operations, LLC, Nashville, TN 37201 (US)
(72) Inventor: MIKLIC, Andrew T., Akron, Ohio 44312 (US); WILSON, Paul B., Tallmadge, Ohio 44278 (US)
(74) Representative: Marks & Clerk LLP
(86) International application number: PCT/US2014/068696
(87) International publication number: WO 2015/088890

(56) References cited:
- KR-A- 20130 075 792
- US-A- 4 911 217
- US-A1- 2006 102 269
- US-A1- 2008 289 736
- US-A1- 2008 289 736
- US-A1- 2008 303 674
- US-A1- 2010 122 757
- US-A1- 2012 291 936

## Description

### FIELD OF INVENTION

The present invention relates to a tire comprising an electronic device, such as a radio frequency identification ("RFID") tag.

### BACKGROUND

Incorporation of an electronic device, such as an RFID tag, into a tire can occur during tire construction and before vulcanization or in a post-cure procedure. Such electronic devices have utility in transmitting data, such as tire-specific identification data, to an external reader. Ultra-high frequency ("UHF") tags are typically small and utilize flexible antennas for the transmission of data. When embedded into a tire, such as during tire construction, the electronic device represents a foreign object that can affect the structural integrity of the tire. Many locations within a tire are not suitable for placing an RFID tag because of cyclical flexural bending in service or because the location does not permit suitable radio frequency compatibility for reading applications.
Reference is made to US 2008/289736 which discloses a tire including an electronic member, US 2008/303674 which discloses a tire with wireless IC tag and KR 2013/0075792 which discloses a heavy duty tire for obtaining excellent durability in a bead part.

### SUMMARY OF THE INVENTION

The present invention seeks to overcome or ameliorate at least one of the problems associated with the prior art, or provide a useful alternative.

In one embodiment, a tire is as claimed in claim 1.

Further optional features are as claimed in the dependent claims.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a cross section of one embodiment of a tire **100** having an electronic device embedded therein;
**Figure 2** is a schematic drawing of one embodiment of an electronic device;
**Figure 3** is a cross section of the bead region of the tire **100;**
**Figure 4** is a cross section of an alternative embodiment of a bead region of a tire; and
**Figure 5** is a cross section of another alternative embodiment of a bead region of a tire.

### DETAILED DESCRIPTION

The following includes definitions of selected terms employed herein. The definitions include various examples or forms of components that fall within the scope of a term and that may be used for implementation. The examples are not intended to be limiting. Both singular and plural forms of terms may be within the definitions.

"Axial" or "axially" refer to a direction that is parallel to the axis of rotation of a tire.

"Bead" refers to the part of the tire that contacts the wheel and defines a boundary of the sidewall.

"Circumferential" and "circumferentially" refer to a direction extending along the perimeter of the surface of the tread perpendicular to the axial direction.

"Equatorial plane" refers to the plane that is perpendicular to the tire's axis of rotation and passes through the center of the tire's tread.

"Radial" and "radially" refer to a direction perpendicular to the axis of rotation of a tire.

"Sidewall" refers to that portion of the tire between the tread and the bead.

"Tread" refers to that portion of the tire that comes into contact with the road under normal inflation and load.

Directions are stated herein with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" or "top" and "bottom" are used in connection with an element, the "upper" or "top" element is spaced closer to the tread than the "lower" or "bottom" element. Additionally, when relative directional terms such as "above" or "below" are used in connection with an element, an element that is "above" another element is closer to the tread than the other element.

The terms "inward" and "inwardly" refer to a general direction towards the equatorial plane of the tire, whereas "outward" and "outwardly" refer to a general direction away from the equatorial plane of the tire and towards the sidewall of the tire. Thus, when relative directional terms such as "inner" and "outer" are used in connection with an element, the "inner" element is spaced closer to the equatorial plane of the tire than the "outer" element.

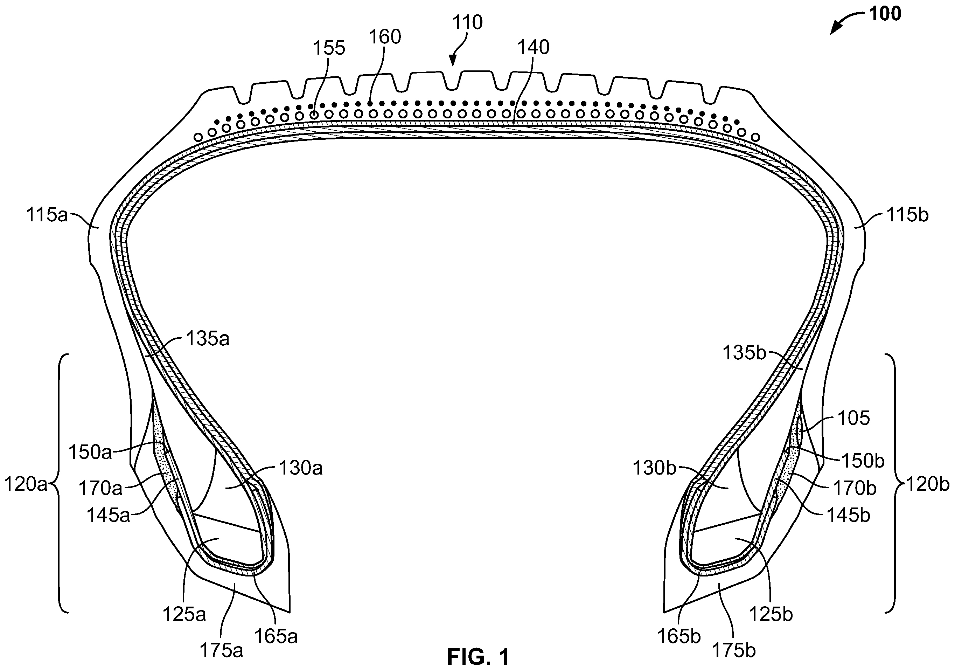

**Figure 1** illustrates a cross section of one embodiment of a tire **100** having an electronic device **105** embedded therein. In the illustrated embodiment, the tire **100** includes a circumferential tread **110** and a pair of sidewalls **115** including a first sidewall **115a** and a second sidewall **115b.** The first sidewall **115a** extends from a first bead region **120a** to the circumferential tread **110.** The second sidewall **115b** likewise extends from a second bead region **120b** to the circumferential tread **110.** Each bead region includes a bead **125a,b** and a bead filler **130a,b** having an apex **135a,b.**

The tire **100** further includes a body ply **140** extending from the first bead region **120a** to the second bead region **120b.** While only a single body ply **140** is shown in the illustrated embodiment, it should be understood that two or more body plies may be employed.

The body ply **140** wraps around each of the beads **125a,b,** thereby forming a first turn up portion **145a** and a second turn up portion **145b.** The first turn up portion **145a** terminates at a first turn up end **150a** located axially outside of the first bead filler **130a** and radially below the apex **135a** of the first bead filler **130a.** Likewise, the second turn up portion **145b** terminates at a second turn up end **150b** located axially outside of the second bead filler **130b** and radially below the apex **135b** of the second bead filler **130b.**

In the illustrated embodiment, the tire **100** further includes a belt **155** and a cap ply **160.** In an alternative embodiment (not shown), the tire may include two or more belts. In another alternative embodiment (not shown), the tire may include two or more cap plies. In yet another alternative embodiment (not shown), the cap ply may be omitted.

With continued reference to **Figure 1****,** the tire **100** further includes a first wire reinforcement **165a** in the first bead region **120a** and a second wire reinforcement **165b** in the second bead region **120b.** Each wire reinforcement **165a,b** wraps around the respective bead **125a,b** and part of the respective bead filler **130a,b** and body ply **140.** The wire reinforcements **165a,b** may provide a structural reinforcement to the tire **100,** or it may protect the body ply **140** from abrasion. However, it should be understood that the wire reinforcements **165a,b** need not serve such functions. In an alternative embodiment (not shown), which does not belong to the present invention, the wire reinforcement may be omitted.

The tire **100** also includes a pair of reinforcement fillers **170,** including a first reinforcement filler **170a** located axially outside of the first bead filler **130a** and a second reinforcement filler **170b** located axially outside of the second bead filler **130b.** Each reinforcement filler **170a,b** has a top end disposed below the apex **135a,b** of the respective bead filler **130a,b** and radially above the turn up end **150a,b** of the respective turn up portion **145a,b** of the body ply **140.**

The tire **100** further includes a pair of abrasion portions **175,** including a first abrasion portion **175a** and a second abrasion portion **175b.** Each abrasion portion **175** at least partially wraps around a bead **125** and bead filler **130a,b** such that each abrasion portion includes a first portion disposed axially outside a respective bead filler **130a,b,** reinforcement filler **170,** and turn up portion **145** of the body ply **140.** Each abrasion portion **175** further includes a second portion disposed below a respective bead **125.**

The electronic device **105** is disposed in one of the bead regions **120** at a location radially below the apex **135** of the respective bead filler **130a,b** and axially outside the bead filler **130a,b.** The electronic device **105** is axially spaced from the bead filler **130a,b** such that the electronic device **105** does not contact the bead filler **130a,b.** While the illustrated embodiment shows the electronic device **105** disposed on the right side of the tire **100,** it should be understood that the electronic device may be disposed on either side of the tire. It should be further understood that a tire could have multiple electronic devices, as one device disposed on each side of the tire.

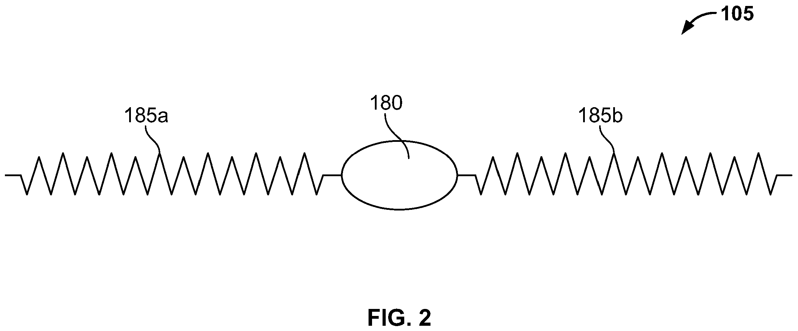

**Figure 2** is a schematic drawing of one embodiment of an electronic device **105.** In the illustrated embodiment, the electronic device **105** is an RFID tag having a passive RFID transponder **180** and a pair of antennae **185a,b** forming a dipole. The RFID tag may be embedded in a material, such as rubber or another polymeric material. Alternatively, a bare RFID tag may be employed. It should be understood, however, that the illustrated embodiment is merely exemplary, and any electronic device may be employed.

In one embodiment, the electronic device **105** is oriented in a substantially circumferential direction.

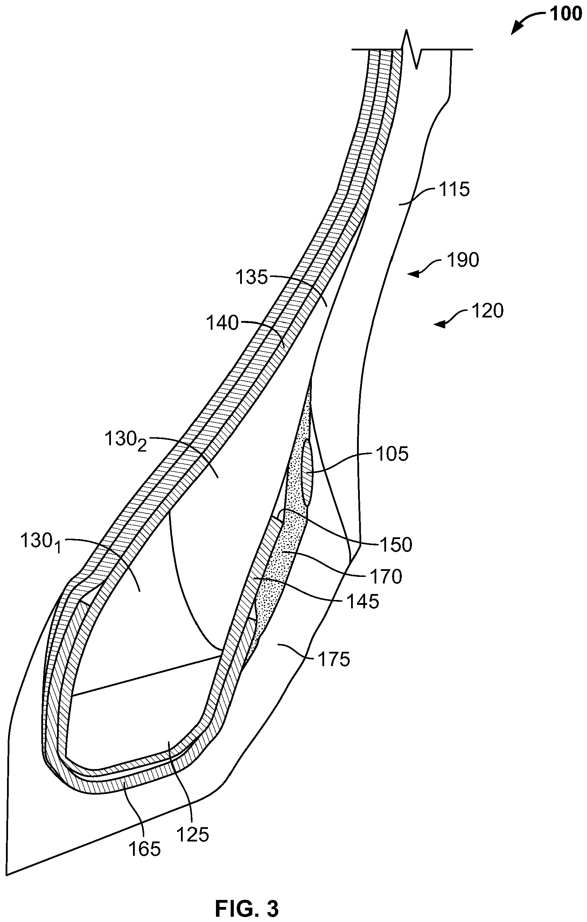

**Figure 3** illustrates a cross section of one of the bead regions **120** of the tire **100.** As can be seen in this illustration, the wire reinforcement **165** wraps around the bead **125** and partially wraps around the bead filler **130a,b** such that the wire reinforcement **165** has an inner portion axially inside the body ply **140** and an outer portion axially outside the turn up portion **145** of the body ply **140.** The inner portion of the wire reinforcement **165** has an inner end terminating radially above the bead **125** and radially below the apex **135** of the bead filler **130a,b.** The outer portion of the wire reinforcement **165** has an outer end radially above the bead **125** and radially below the turn up end **150** of the turn up portion **145** of the body ply **140.** However, it should be understood that the illustrated wire reinforcement is merely exemplary, and that, in alternative embodiments which do not belong to the present invention, the inner and outer ends may be disposed at any location. In an alternative embodiment (not shown), which does not belong to the present invention, the wire reinforcement may be omitted.

With continued reference to **Figure 3****,** the reinforcement filler **170** has an inner surface with an upper portion contacting an outer surface of the bead filler **130a,b,** a middle portion contacting an outer surface of the turn up portion **145** of the body ply **140,** and a lower portion contacting an outer surface of the wire reinforcement **165.** The electronic device **105** is sandwiched between the reinforcement filler **170** and the abrasion portion **175,** such that the electronic device **105** contacts both the reinforcement filler **170** and the abrasion portion **175.** The electronic device **105** is disposed radially above the turn up end **150** of the turn up portion **145** of the body ply **140.** In an alternative embodiment (not shown), at least a portion of the electronic device **105** is radially below the turn up end of the turn up portion of the body ply. In another alternative embodiment (not shown), the electronic device may be spaced from one or both of the reinforcement filler and the abrasion portion. In yet another alternative embodiment (not shown), a lower portion of the electronic device is sandwiched between the reinforcement filler and the abrasion portion while an upper portion of the electronic device is sandwiched between the sidewall and the bead filler.

In the illustrated embodiment, the upper end of the abrasion portion **175** is sandwiched between the reinforcement filler **170** and a lower end of the sidewall **115.** In an alternative embodiment (not shown), the lower end of the sidewall may instead be sandwiched between the reinforcement filler and the upper end of the abrasion portion. In such an embodiment, at least a portion of the electronic device may be sandwiched between the sidewall and the reinforcement filler.

In the illustrated embodiment, an upper portion of the abrasion portion **175** is disposed between the reinforcement filler **170** and the sidewall **115,** such that the abrasion portion **175** is in contact with the reinforcement filler **170** and the sidewall **115.** In an alternative embodiment (not shown), the abrasion portion may be spaced from one or both of the reinforcement filler and the sidewall.

With continued reference to **Figure 3****,** a portion of the sidewall **115** includes a concave outer surface **190.** In an alternative embodiment (not shown), the sidewall does not include this concave section.

In the illustrated embodiment, the bead filler **130a,b** includes a first portion **130₁** constructed of a first material and a second portion **130₂** constructed of a second material, the first material being harder than the second material. The first portion **130₁** is disposed between the bead **125** and the second portion **130₂**. In an alternative embodiment, the bead filler may be constructed of a single material. In another alternative embodiment, the bead filler may have three or more portions constructed of different materials.

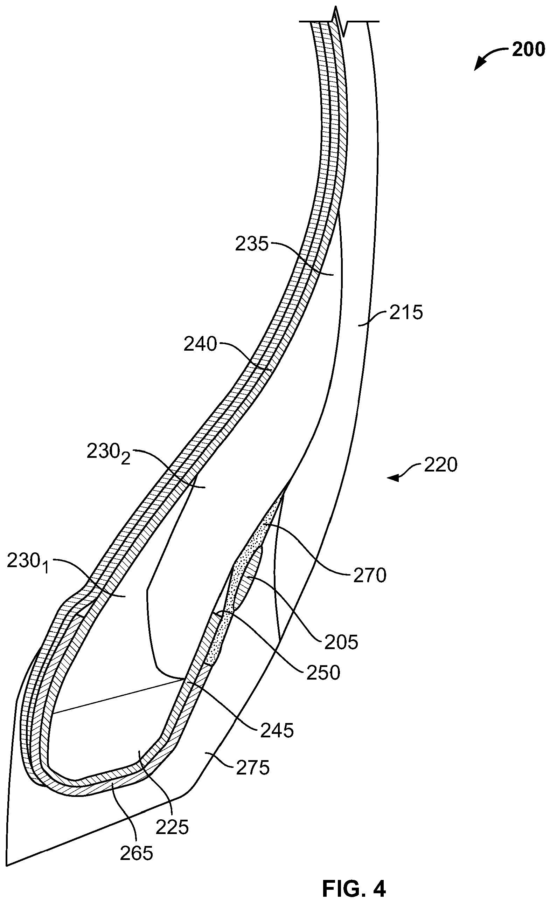

**Figure 4** illustrates a cross section of a portion of an alternative embodiment of a tire **200** having an electronic device **205.** As can be seen in this illustration, this portion of the tire **200** is substantially similar to the bead region **120** of the tire **100,** except the sidewall **215** does not include a concave portion.

A bead region **220** of the tire **200** is illustrated. The bead region **220** includes a bead **225** and a bead filler **230₁, 230₂** having an apex **235.** The tire **200** further includes a body ply **240** having a turn up portion **245** and a turn up end **250.** A wire reinforcement **265** wraps around the bead **225** and partially wraps around the bead filler **230₁**, **230₂** such that the wire reinforcement **265** has an inner portion axially inside the body ply **240** and an outer portion axially outside the turn up portion **245** of the body ply **240.** The inner portion of the wire reinforcement **265** has an inner end terminating radially above the bead **225** and radially below the apex **235** of the bead filler **230₁**, **230₂**. The outer portion of the wire reinforcement **265** has an outer end radially above the bead **225** and radially below the turn up end **250** of the turn up portion **245** of the body ply **240.** However, it should be understood that the illustrated wire reinforcement is merely exemplary, and that, in alternative embodiments which do not belong to the present invention, the inner and outer ends may be disposed at any location. In an alternative embodiment (not shown), which does not belong to the present invention, the wire reinforcement may be omitted.

With continued reference to **Figure 4****,** a reinforcement filler **270** has an inner surface with an upper portion contacting an outer surface of the bead filler **230₁**, **230₂,** a middle portion contacting an outer surface of the turn up portion **245** of the body ply **240,** and a lower portion contacting an outer surface of the wire reinforcement **265.** The electronic device **205** is sandwiched between the reinforcement filler **270** and an abrasion portion **275,** such that the electronic device **205** contacts both the reinforcement filler **270** and the abrasion portion **275.** The electronic device **205** is disposed radially above the turn up end **250** of the turn up portion **245** of the body ply **240.** In an alternative embodiment (not shown), at least a portion of the electronic device **205** is radially below the turn up end of the turn up portion of the body ply. In another alternative embodiment (not shown), the electronic device may be spaced from one or both of the reinforcement filler and the abrasion portion.

In the illustrated embodiment, an upper portion of the abrasion portion **275** is disposed between the reinforcement filler **270** and the sidewall **215,** such that the abrasion portion **275** is in contact with the reinforcement filler **270** and the sidewall **215.** In an alternative embodiment (not shown), the abrasion portion may be spaced from one or both of the reinforcement filler and the sidewall.

In the illustrated embodiment, the bead filler **230₁**, **230₂** includes a first portion **230₁** constructed of a first material and a second portion **230₂** constructed of a second material, the first material being harder than the second material. The first portion **230₁** is disposed between the bead **225** and the second portion **230₂**. In an alternative embodiment, the bead filler may be constructed of a single material. In another alternative embodiment, the bead filler may have three or more portions constructed of different materials.

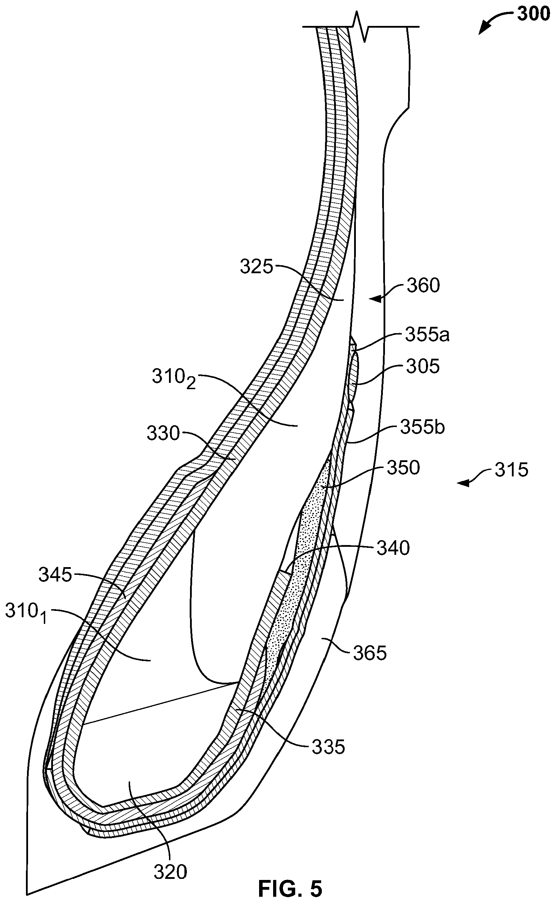

**Figure 5** illustrates a cross section of a portion of another alternative embodiment of a tire **300** having an electronic device **305** spaced from a bead filler **310₁, 310₂.** While only a bead region **315** of the tire **300** is shown, it should be understood that that the tire **300** may share the features of tire **100** illustrated in **Figure 1****,** except for the differences described below.

The bead region **315** includes a bead **320** and the bead filler **310₁, 310₂.** The bead filler **310₁, 310₂** has an apex **325.** The bead filler **310₁, 310₂** includes a first portion **310₁** constructed of a first material and a second portion **310₂** constructed of a second material, the first material being harder than the second material. The first portion **310₁** is disposed between the bead **320** and the second portion **310₂.** In an alternative embodiment, the bead filler may be constructed of a single material. In another alternative embodiment, the bead filler may have three or more portions constructed of different materials.

A body ply **330** wraps around the bead **320** and a portion of the bead filler **310₁, 310₂**, such that a turn up portion **335** terminates at a turn up end **340** axially outside of the bead **320** and radially below the apex **325** of the bead filler **310₁, 310₂.**

A wire reinforcement **345** partially wraps around the bead **320** and the bead filler **310₁, 310₂** such that the wire reinforcement **345** has an inner portion axially inside the body ply **330** and an outer portion axially outside the turn up portion **335** of the body ply **330.** The inner portion of the wire reinforcement **345** has an inner end disposed radially above the bead **320** and radially below the apex **325** of the bead filler **310₁, 310₂.** The outer portion of the wire reinforcement **345** has an outer end radially above the bead **320** and radially below the turn up end **340** of the turn up portion **335** of the body ply **330.** However, it should be understood that the illustrated wire reinforcement is merely exemplary, and that, in alternative embodiments which do not belong to the present invention, the inner and outer ends may be disposed at any location. In an alternative embodiment (not shown), which does not belong to the present invention, the wire reinforcement may be omitted.

The bead region **315** of the tire **300** further includes a reinforcement filler **350.** The reinforcement filler **350** has an inner surface with an upper portion contacting an outer surface of the bead filler **310₁, 310₂**, a middle portion contacting an outer surface of the turn up portion **335** of the body ply **330,** and a lower portion contacting an outer surface of the wire reinforcement **345.** The reinforcement filler **350** has a top end disposed below the apex **325** of the bead filler **310₁, 310₂.**

The bead region **315** further includes a pair of chafers **355a,b,** including a first chafer **355a** and a second chafer **355b** disposed outside of the first chafer **355a.** The pair of chafers **355a,b** at least partially wraps around the bead **320** and bead filler **310₁, 310₂**, such that the pair of chafers **355a,b** includes a first portion disposed axially outside the bead filler **310₁, 310₂**, the reinforcement filler **350,** and the turn up portion **335** of the body ply **330.** The pair of chafers further includes a second portion disposed below the bead **320.**

While two chafers are shown in the illustrated embodiment, it should be understood that a single chafer may be employed in an alternative embodiment. In another alternative embodiment (not shown), three or more chafers may be employed.

In the illustrated embodiment, the first chafer **355a** has a first outer end and the second chafer **355b** has a second outer end located radially below the first outer end of the first chafer **355a.** In an alternative embodiment (not shown), the first chafer and second chafer have outer ends that terminate at the same radial height. In another alternative embodiment (not shown), the first chafer has a first outer end located radially below the second outer end of the second chafer.

The first chafer **355a** is disposed between the electronic device **305** and the bead filler **310₁, 310₂**, 310, such that the electronic device **305** is sandwiched between the first portion of the first chafer **355a** and a sidewall **360.** The electronic device **305** is disposed at a location radially below the first outer end of the first chafer **355a** and radially above the second outer end of the second chafer **355b.** In an alternative embodiment (not shown), at least a portion of the electronic device is disposed below the second outer end of the second chafer **355b.**

In the illustrated embodiment, the first chafer **355a** contacts the electronic device **305** and the second chafer **355b** does not contact the electronic device **305.** In an alternative embodiment (not shown), both the first chafer and the second chafer contact the electronic device. In another alternative embodiment (not shown), the second chafer contacts the electronic device, but the first chafer does not. In yet another alternative embodiment (not shown), the electronic device is spaced from both the first and second chafers.

The bead region **315** further includes an abrasion portion **365** that at least partially wraps around the bead **320** and bead filler **310¹, 310².** In the illustrated embodiment, the upper end of the abrasion portion **365** is sandwiched between the second chafer **355b** and a lower end of the sidewall **360.** In an alternative embodiment (not shown), the lower end of the sidewall may instead be sandwiched between the second chafer and the upper end of the abrasion portion. In another alternative embodiment (not shown), the abrasion portion may be omitted, and the sidewall rubber may extend around the bead region.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the present invention, in its broader aspects, is not limited to the specific details, the representative apparatus and method, and illustrative examples shown and described, but is defined by the appended claims.

## Claims

1. A tire (100, 200, 300) comprising:
a circumferential tread (110);
a pair of sidewalls (115a, 115b, 215, 360);
a pair of bead portions, each bead portion including a bead (125a, 125b, 225, 320) and a bead filler (130a, 130b, 230₁ 230₂, 310₁, 310₂) having an apex (135a, 135b, 235, 325);
at least one body ply (140, 240, 330) extending from bead (125a, 125b, 225, 320) to bead (125a, 125b, 225, 320), including a pair of turn up portions, each turn up portion having a turn up end (150a, 150b, 250, 340) axially outside of a respective bead (125a, 125b, 225, 320) and radially below the apex (135a, 135b, 235, 325) of a respective bead filler (130a, 130b, 230₁ 230₂, 310₁, 310₂);
a pair of wire reinforcements (165a, 165b, 265, 345);
a pair of reinforcement fillers (170a, 170b, 270, 350);
and
an electronic device (105, 205, 305) disposed radially below the apex (135a, 135b, 235, 325) of the bead filler (130a, 130b, 230₁ 230₂, 310₁, 310₂) of one of the bead portions and axially outside the bead filler (130a, 130b, 230₁ 230₂, 310₁, 310₂), wherein the electronic device (105, 205, 305) is axially spaced from the bead filler (130a, 130b, 230₁ 230₂, 310₁, 310₂) such that the electronic device (105, 205, 305) does not contact the bead filler (130a, 130b, 230₁ 230₂, 310₁, 310₂), wherein each reinforcement filler (170a, 170b, 270, 350) has an inner surface with an upper portion contacting an outer surface of a respective bead filler (130a, 130b, 230₁, 230₂, 310₁, 310₂), a middle portion contacting an outer surface of a respective turn up portion of the body ply (140, 240, 330), and a lower portion, **characterised in that**:
each wire reinforcement (165a, 165b, 265, 345) wraps around one of the pair of bead portions such that each wire reinforcement (165a, 165b, 265, 345) has an inner portion axially inside the body ply (140, 240, 330) and an outer portion axially outside a respective turn up portion of the body ply (140, 240, 330),
the inner portion of each wire reinforcement (165a, 165b, 265, 345) has an inner end disposed radially above a respective bead (125a, 125b, 225, 320) and radially below the apex (135a, 135b, 235, 325) of a respective bead filler (130a, 130b, 230₁ 230₂, 310₁, 310₂), and
the outer portion of each wire reinforcement (165a, 165b, 265, 345) has an outer end disposed radially above a respective bead (125a, 125b, 225, 320) and radially below the turn up end (150a, 150b, 250, 340) of a respective turn up portion of the body ply (140, 240, 330),
the lower portion of the inner surface of each reinforcement filler (170a, 170b, 270, 350) contacts an outer surface of a respective wire reinforcement (165a, 165b, 265, 345), and
each reinforcement filler (170a, 170b, 270, 350) has a top end disposed below the apex (135a, 135b, 235, 325) of the respective bead filler (130a, 130b, 230₁ 230₂, 310₁, 310₂).

2. The tire (100, 200, 300) of claim 1, wherein the bead filler (130a, 130b, 230₁ 230₂, 310₁, 310₂) in each of the pair of bead portions is constructed of a first material and a second material, the first material being harder than the second material, optionally wherein the first material of the bead filler (130a, 130b, 230₁ 230₂, 310₁, 310₂) is disposed between the bead (125a, 125b, 225, 320) and the second material of the respective bead portion.

3. The tire (300) of claim 1, further comprising a pair of chafers (355a, 355b), each chafer (355a, 355b) at least partially wrapping around one of the pair of bead portions such that each chafer (355a, 355b) includes:
a first portion disposed axially outside a respective bead filler (310₁, 310₂), a respective reinforcement filler (350), and a respective turn up portion of the body ply (330), and
a second portion disposed below a respective bead (320).

4. The tire (100, 200, 300) of claim 1, further comprising a pair of abrasion portions (175a, 175b, 275, 365), each abrasion portion (175a, 175b, 275, 365) at least partially wrapping around one of the pair of bead portions such that each abrasion portion (175a, 175b, 275, 365) includes:
a first portion disposed axially outside a respective bead filler (130a, 130b, 230₁ 230₂, 310₁, 310₂), a respective reinforcement filler (170a, 170b, 270, 350), and a respective turn up portion of the body ply (140, 240, 330), and
a second portion disposed below a respective bead (125a, 125b, 225, 320), optionally, wherein the electronic device (105, 205) is sandwiched between one of the pair of reinforcement fillers (170, 270) and the sidewall (115, 215).

5. The tire (300) of claim 1, wherein the bead portion on which the electronic device (305) is disposed further comprises a pair of chafers (355a, 355b), including a first chafer (355a) and a second chafer (355b) disposed outside of the first chafer (355a), the pair of chafers (355a, 355b) at least partially wraps around the respective bead (320) and the respective bead filler (310₁, 310₂), such that the pair of chafers (355a, 355b) includes a first portion disposed axially outside the respective bead filler (310₁, 310₂), the respective reinforcement filler (350), and the turn up portion of the body ply (330), the pair of chafers (355a, 355b) further includes a second portion disposed below the respective bead (320), the first chafer (355a) has a first outer end and the second chafer (355b) has a second outer end located radially below the first outer end of the first chafer (355a), the first chafer (355a) is disposed between the electronic device (305) and the respective bead filler (310₁, 310₂), such that the electronic device (305) is sandwiched between the first portion of the first chafer (355a) and the respective sidewall (360), the electronic device (305) is disposed at a location radially below the first outer end of the first chafer (355a) and radially above the second outer end of the second chafer (355b), the first chafer (355a) contacts the electronic device (305) and the second chafer (355b) does not contact the electronic device (305).

6. The tire (100, 200, 300) of claim 1, wherein the electronic device (105, 205, 305) is a radio frequency identification tag having a passive radio frequency identification transponder (180) and a pair of antennae (185a, 185b) forming a dipole.

7. The tire (100) of claim 1, wherein each of the pair of sidewalls (115a, 115b) includes a concave outer surface (190).

## Patentansprüche

1. Reifen (100, 200, 300), umfassend:
eine Umfangslauffläche (110);
ein Paar Seitenwände (115a, 115b, 215, 360);
ein Paar Wulstabschnitte, wobei jeder Wulstabschnitt einen Wulst (125a, 125b, 225, 320) und einen Wulstfüller (130a, 130b, 230₁, 230₂, 310₁, 310₂) mit einem Scheitelpunkt (135a, 135b, 235, 325) einschließt;
mindestens eine Körperlage (140, 240, 330), die sich von dem Wulst (125a, 125b, 225, 320) zu dem Wulst (125a, 125b, 225, 320) erstreckt, einschließlich eines Paares Umschlagabschnitte, wobei jeder Umschlagabschnitt ein Umschlagende (150a, 150b, 250, 340) axial außerhalb eines jeweiligen Wulsts (125a, 125b, 225, 320) und radial unterhalb des Scheitelpunkts (135a, 135b, 235, 325) eines jeweiligen Wulstfüllers (130a, 130b, 230₁, 230₂, 310₁, 310₂) aufweist;
ein Paar Drahtverstärkungen (165a, 165b, 265, 345);
ein Paar Verstärkungsfüller (170a, 170b, 270, 350); und
eine elektronische Vorrichtung (105, 205, 305), die radial unterhalb des Scheitelpunkts (135a, 135b, 235, 325) des Wulstfüllers (130a, 130b, 230₁, 230₂, 310₁, 310₂) eines der Wulstabschnitte und axial außerhalb des Wulstfüllers (130a, 130b, 230₁ 230₂, 310₁, 310₂) angeordnet ist, wobei die elektronische Vorrichtung (105, 205, 305) axial von dem Wulstfüller (130a, 130b, 230₁, 230₂, 310₁, 310₂) derart beabstandet ist, dass die elektronische Vorrichtung (105, 205, 305) den Wulstfüller (130a, 130b, 230₁, 230₂, 310₁, 310₂) nicht berührt, wobei jeder Verstärkungsfüller (170a, 170b, 270, 350) eine Innenoberfläche mit einem oberen Abschnitt, der eine Außenoberfläche eines jeweiligen Wulstfüllers (130a, 130b, 230₁, 230₂, 310₁, 310₂) berührt, einem mittleren Abschnitt, der eine Außenoberfläche eines jeweiligen Umschlagabschnitts der Körperlage (140, 240, 330) berührt, und einem unteren Abschnitt aufweist, **dadurch gekennzeichnet, dass:**
sich jede Drahtverstärkung (165a, 165b, 265, 345) um einen von dem Paar Wulstabschnitte derart wickelt, dass jede Drahtverstärkung (165a, 165b, 265, 345) einen Innenabschnitt axial innerhalb der Körperlage (140, 240, 330) und einen Außenabschnitt axial außerhalb eines jeweiligen Umschlagabschnitts der Körperlage (140, 240, 330) aufweist,
der innere Abschnitt jeder Drahtverstärkung (165a, 165b, 265, 345) ein inneres Ende aufweist, das radial über einem jeweiligen Wulst (125a, 125b, 225, 320) und radial unterhalb des Scheitelpunkts (135a, 135b, 235, 325) eines jeweiligen Wulstfüllers (130a, 130b, 230₁, 230₂, 310₁, 310₂) angeordnet ist, und
der äußere Abschnitt jeder Drahtverstärkung (165a, 165b, 265, 345) ein äußeres Ende aufweist, das radial über einem jeweiligen Wulst (125a, 125b, 225, 320) und radial unterhalb des Umschlagendes (150a, 150b, 250, 340) eines jeweiligen Umschlagabschnitts der Körperlage (140, 240, 330) angeordnet ist,
der untere Abschnitt der Innenoberfläche jedes Verstärkungsfüllers (170a, 170b, 270, 350) eine Außenoberfläche einer jeweiligen Drahtverstärkung (165a, 165b, 265, 345) berührt und
jeder Verstärkungsfüller (170a, 170b, 270, 350) ein oberes Ende aufweist, das unterhalb des Scheitelpunkts (135a, 135b, 235, 325) des jeweiligen Wulstfüllers (130a, 130b, 230₁, 230₂, 310₁, 310₂) angeordnet ist.

2. Reifen (100, 200, 300) nach Anspruch 1, wobei der Wulstfüller (130a, 130b, 230₁, 230₂, 310₁, 310₂) in jedem von dem Paar Wulstabschnitte aus einem ersten Material und einem zweiten Material aufgebaut ist, wobei das erste Material härter als das zweite Material ist, optional wobei das erste Material des Wulstfüllers (130a, 130b, 230₁, 230₂, 310₁, 310₂) zwischen dem Wulst (125a, 125b, 225, 320) und dem zweiten Material des jeweiligen Wulstabschnitts angeordnet ist.

3. Reifen (300) nach Anspruch 1, ferner ein Paar Wulstschutzstreifen (355a, 355b) umfassend, wobei sich jeder Wulstschutzstreifen (355a, 355b) mindestens teilweise um einen von dem Paar Wulstabschnitte (355a, 355b) derart wickelt, dass jeder Wulstschutzstreifen einschließt:
einen ersten Abschnitt, der axial außerhalb eines jeweiligen Wulstfüllers (310₁, 310₂), eines jeweiligen Verstärkungsfüllers (350) und eines jeweiligen Umschlagabschnitts der Körperlage (330) angeordnet ist, und einen zweiten Abschnitt, der unterhalb eines jeweiligen Wulsts (320) angeordnet ist.

4. Reifen (100, 200, 300) nach Anspruch 1, ferner ein Paar Abriebabschnitte (175a, 175b, 275, 365) umfassend, wobei sich jeder Abriebabschnitt (175a, 175b, 275, 365) mindestens teilweise um einen von dem Paar Wulstabschnitte wickelt, sodass jeder Abriebabschnitt (175a, 175b, 275, 365) einschließt:
einen ersten Abschnitt, der axial außerhalb eines jeweiligen Wulstfüllers (130a, 130b, 230₁, 230₂, 310₁, 310₂) angeordnet ist, einen jeweiligen Verstärkungsfüller (170a, 170b, 270, 350) und einen jeweiligen Umschlagabschnitt der Körperlage (140, 240, 330) und
einen zweiten Abschnitt, der unterhalb eines jeweiligen Wulsts (125a, 125b, 225, 320) angeordnet ist,
optional, wobei die elektronische Vorrichtung (105, 205) zwischen einem von dem Paar Verstärkungsfüller (170, 270) und der Seitenwand (115, 215) eingeklemmt angeordnet ist.

5. Reifen (300) nach Anspruch 1, wobei der Wulstabschnitt, auf dem die elektronische Vorrichtung (305) angeordnet ist, ferner ein Paar Wulstschutzstreifen (355a, 355b) umfasst, einschließlich eines ersten Wulstschutzstreifens (355a) und eines zweiten Wulstschutzstreifens (355b), der außerhalb des ersten Wulstschutzstreifens (355a) angeordnet ist, wobei das Paar Wulstschutzstreifen (355a, 355b) mindestens teilweise die jeweilige Wulst (320) und den jeweiligen Wulstfüller (310₁, 310₂) derart umwickelt, dass das Paar Wulstschutzstreifen (355a, 355b) einen ersten Abschnitt einschließt, der axial außerhalb des jeweiligen Wulstfüllers (310_{1,} 310₂), des jeweiligen Verstärkungsfüllers (350) und des Umschlagabschnitts der Körperlage (330) angeordnet ist, das Paar Wulstschutzstreifen (355a, 355b) ferner einen zweiten Abschnitt einschließt, der unterhalb des jeweiligen Wulsts (320) angeordnet ist, wobei der erste Wulstschutzstreifen (355a) ein erstes äußeres Ende aufweist und der zweite Wulstschutzstreifen (355b) ein zweites äußeres Ende aufweist, das sich radial unterhalb des ersten äußeren Endes des ersten Wulstschutzstreifens (355a) befindet, wobei der erste Wulstschutzstreifen (355a) zwischen der elektronischen Vorrichtung (305) und dem jeweiligen Wulstfüller (310₁, 310₂) derart angeordnet ist, dass die elektronische Vorrichtung (305) zwischen dem ersten Abschnitt des ersten Wulstschutzstreifens (355a) und der jeweiligen Seitenwand (360) eingeklemmt angeordnet ist, wobei die elektronische Vorrichtung (305) an einer Stelle radial unterhalb des ersten äußeren Endes des ersten Wulstschutzstreifens (355a) und radial oberhalb des zweiten äußeren Endes des zweiten Wulstschutzstreifens (355b) angeordnet ist, wobei der erste Wulstschutzstreifen (355a) die elektronische Vorrichtung (305) berührt und der zweite Wulstschutzstreifen (355b) die elektronische Vorrichtung (305) nicht berührt.

6. Reifen (100, 200, 300) nach Anspruch 1, wobei die elektronische Vorrichtung (105, 205, 305) ein Hochfrequenz-Identifikationstag ist, das einen passiven Hochfrequenz-Identifikationstransponder (180) und ein Paar Antennen (185a, 185b), das einen Dipol bildet, aufweist.

7. Reifen (100) nach Anspruch 1, wobei jede von dem Paar Seitenwänden (115a, 115b) eine konkave Außenoberfläche (190) einschließt.

## Revendications

1. Pneu (100, 200, 300) comprenant :
une bande de roulement circonférentielle (110) ;
une paire de flancs (115a, 115b, 215, 360) ;
une paire de parties talon, chaque partie talon comportant un talon (125a, 125b, 225, 320) et un bourrage sur tringle (130a, 130b, 230₁ 2302, 310₁, 310₂) ayant un point culminant (135a, 135b, 235, 325) ;
au moins une nappe carcasse (140, 240, 330) s'étendant de talon (125a, 125b, 225, 320) à talon (125a, 125b, 225, 320), comportant une paire de parties recourbées, chaque partie recourbée ayant une extrémité recourbée (150a, 150b, 250, 340) axialement à l'extérieur d'un talon respectif (125a, 125b, 225, 320) et radialement en dessous du point culminant (135a, 135b, 235, 325) d'un bourrage sur tringle respectif (130a, 130b, 230₁ 230₂, 310₁, 310₂) ;
une paire de renforts câblés (165a, 165b, 265, 345) ;
une paire de bourrages de renfort (170a, 170b, 270, 350) ; et
un dispositif électronique (105, 205, 305) disposé radialement en dessous du point culminant (135a, 135b, 235, 325) du bourrage sur tringle (130a, 130b, 230₁ 230₂, 310₁, 310₂) de l'une des parties talon et axialement à l'extérieur du bourrage sur tringle (130a, 130b, 230₁ 230₂, 310₁, 310₂), le dispositif électronique (105, 205, 305) étant axialement espacé du bourrage sur tringle (130a, 130b, 230₁ 230₂, 310₁, 310₂) de telle sorte que le dispositif électronique (105, 205, 305) ne vient pas en contact avec le bourrage sur tringle (130a, 130b, 230₁ 230₂, 310₁, 310₂), chaque bourrage de renfort (170a, 170b, 270, 350) ayant une surface interne avec une partie supérieure venant en contact avec une surface externe d'un bourrage sur tringle respectif (130a, 130b, 230₁, 230₂, 310₁, 310₂), une partie centrale venant en contact avec une surface externe d'une partie recourbée respective de la nappe carcasse (140, 240, 330), et une partie inférieure, **caractérisé en ce que** :
chaque renfort câblé (165a, 165b, 265, 345) s'enveloppe autour de l'une parmi la paire de parties talon de telle sorte que chaque renfort câblé (165a, 165b, 265, 345) a une partie interne axialement à l'intérieur de la nappe carcasse (140, 240, 330) et une partie externe axialement à l'extérieur d'une partie recourbée respective de la nappe carcasse (140, 240, 330),
la partie interne de chaque renfort câblé (165a, 165b, 265, 345) a une extrémité interne disposée radialement au-dessus d'un talon respectif (125a, 125b, 225, 320) et radialement en dessous du point culminant (135a, 135b, 235, 325) d'un bourrage sur tringle respectif (130a, 130b, 230₁ 230₂, 310₁, 310₂), et
la partie externe de chaque renfort câblé (165a, 165b, 265, 345) a une extrémité externe disposée radialement au-dessus d'un talon respectif (125a, 125b, 225, 320) et radialement en dessous de l'extrémité recourbée (150a, 150b, 250, 340) d'une partie recourbée respective de la nappe carcasse (140, 240, 330),
la partie inférieure de la surface interne de chaque bourrage de renfort (170a, 170b, 270, 350) vient en contact avec une surface externe d'un renfort câblé respectif (165a, 165b, 265, 345), et
chaque bourrage de renfort (170a, 170b, 270, 350) a une extrémité supérieure disposée en dessous du point culminant (135a, 135b, 235, 325) du bourrage sur tringle respectif (130a, 130b, 230₁230₂, 310₁, 310₂).

2. Pneu (100, 200, 300) selon la revendication 1, dans lequel le bourrage sur tringle (130a, 130b, 230₁ 230₂, 310₁, 310₂) dans chacune parmi la paire de parties talon est constitué d'un premier matériau et d'un second matériau, le premier matériau étant plus dur que le second matériau, facultativement dans lequel le premier matériau du bourrage sur tringle (130a, 130b, 230₁ 230₂, 310₁, 310₂) est disposé entre le talon (125a, 125b, 225, 320) et le second matériau de la partie talon respective.

3. Pneu (300) selon la revendication 1, comprenant en outre une paire de bandelettes talons (355a, 355b), chaque bandelette talon (355a, 355b) s'enveloppant au moins partiellement autour de l'une parmi la paire de parties talon de telle sorte que chaque bandelette talon (355a, 355b) comporte :
une première partie disposée axialement à l'extérieur d'un bourrage sur tringle respectif (310₁ 310₂), d'un bourrage de renfort respectif (350) et d'une partie recourbée respective de la nappe carcasse (330), et une seconde partie disposée en dessous d'un talon respectif (320).

4. Pneu (100, 200, 300) selon la revendication 1, comprenant en outre une paire de parties d'abrasion (175a, 175b, 275, 365), chaque partie d'abrasion (175a, 175b, 275, 365) s'enveloppant au moins partiellement autour de l'une parmi la paire de parties talon de telle sorte que chaque partie d'abrasion (175a, 175b, 275, 365) comporte :
une première partie disposée axialement à l'extérieur d'un bourrage sur tringle respectif (130a, 130b, 230₁ 230₂, 310₁, 310₂), d'un bourrage de renfort respectif (170a, 170b, 270, 350) et d'une partie recourbée respective de la nappe carcasse (140, 240, 330), et
une seconde partie disposée en dessous d'un talon respectif (125a, 125b, 225, 320),
facultativement, dans lequel le dispositif électronique (105, 205) est placé en sandwich entre l'un parmi la paire de bourrages de renfort (170, 270) et le flanc (115, 215).

5. Pneu (300) selon la revendication 1, dans lequel la partie talon sur laquelle le dispositif électronique (305) est disposé comprend en outre une paire de bandelettes talons (355a, 355b), comportant une première bandelette talon (355a) et une seconde bandelette talon (355b) disposée à l'extérieur de la première bandelette talon (355a), la paire de bandelettes talons (355a, 355b) s'enveloppant au moins partiellement autour du talon respectif (320) et du bourrage sur tringle respectif (310₁, 310₂), de telle sorte que la paire de bandelettes talons (355a, 355b) comporte une première partie disposée axialement à l'extérieur du bourrage sur tringle respectif (310₁, 310₂), du bourrage de renfort respectif (350) et de la partie recourbée de la nappe carcasse (330), la paire de bandelettes talons (355a, 355b) comportant en outre une seconde partie disposée en dessous du talon respectif (320), la première bandelette talon (355a) ayant une première extrémité externe et la seconde bandelette talon (355b) ayant une seconde extrémité externe localisée radialement en dessous de la première extrémité externe de la première bandelette talon (355a), la première bandelette talon (355a) étant disposée entre le dispositif électronique (305) et le bourrage sur tringle respectif (310₁, 310₂), de telle sorte que le dispositif électronique (305) est placé en sandwich entre la première partie de la première bandelette talon (355a) et le flanc respectif (360), le dispositif électronique (305) étant disposé au niveau d'une localisation radialement en dessous de la première extrémité externe de la première bandelette talon (355a) et radialement au-dessus de la seconde extrémité externe de la seconde bandelette talon (355b), la première bandelette talon (355a) venant en contact avec le dispositif électronique (305) et la seconde bandelette talon (355b) ne venant pas en contact avec le dispositif électronique (305).

6. Pneu (100, 200, 300) selon la revendication 1, dans lequel le dispositif électronique (105, 205, 305) est une étiquette d'identification par radiofréquence ayant un transpondeur passif d'identification par radiofréquence (180) et une paire d'antennes (185a, 185b) formant un dipôle.

7. Pneu (100) selon la revendication 1, dans lequel chacun parmi la paire de flancs (115a, 115b) comporte une surface externe concave (190).
